# EUROPÄISCHE PATENTSCHRIFT

(11) **EP 0 860 150 B1**
(45) Veröffentlichungstag und Bekanntmachung des Hinweises auf die Patenterteilung: **12.01.2005**
(21) Anmeldenummer: 98100686.9
(22) Anmeldetag: 16.01.1998
(51) Int. Cl.: A61C 15/00

(54) **Interdental-Reinigungsgerät**
Interdental cleaning device
Dispositif de nettoyage interdentaire

(30) Priorität: 18.02.1997 DE 19706198
(43) Veröffentlichungstag der Anmeldung: 26.08.1998
(73) Patentinhaber: GEKA BRUSH GMBH, 91572 Bechhofen (DE)
(72) Erfinder: Dumler, Norbert, 91522 Ansbach (DE)
(74) Vertreter: Schneck, Herbert, Dipl.-Phys., Dr.

(56) Entgegenhaltungen:
- WO-A-92/18060
- DE-A- 3 322 737
- DE-U- 29 601 661
- US-A- 2 112 658

## Beschreibung

Die Erfindung richtet sich auf ein Interdental-Reinigungsgerät umfassend ein Bürstchen und einen Halter, wobei das Bürstchen am freien Ende des Halters schwenkbar und auswechselbar angeordnet ist, und wobei der Halter aus zwei Halbschalen besteht. Ein derartiges Reinigungsgerät ist beispielsweise bekannt aus DE-U-296 01 661.

Damit das Bürstchen relativ zum Halter einerseits leicht und andererseits endlagenstabil verschwenkbar ist, um die für den Reinigungsvorgang jeweils gewünschte Winkellage zwischen Bürstchen und Halter einstellen zu können, werden an die Lagerung des Bürstchen relativ hohe Anforderungen gestellt.

Hiervon ausgehend liegt der Erfindung die Aufgabe zugrunde, ein Interdental-Reinigungsgerät der eingangs genannten Art so auszugestalten, daß einerseits das Schwenklager für das Bürstchen optimale Gebrauchseigenschaften aufweist, andererseits aber eine kunststofftechnisch einfache Realisierung gewährleistet ist.

Diese Aufgabe wird erfindungsgemäß dadurch gelöst, daß das Bürstchen ein Kugelgelenk-Lagerteil aufweist und die Kugelgelenk-Lagerpfanne durch zwei auseinandernehmbare und zusammenfügbare Gelenkpfannen-Abschnitte gebildet ist, wobei je ein Gelenkpfannen-Abschnitt an je einem Ende einer Halbschale ausgebildet ist.

Durch die Ausgestaltung als Kugelgelenk ist es möglich, die Reibung und damit die Endlagenstabilität sehr definiert einzustellen. Allerdings ist die Realisierung von derart kugelförmigen Gegenlagern spritzgießtechnisch an sich problematisch, da abhängig von den gewählten Kunststoffmaterialien nur begrenzte Hinterschnitte realisierbar sind. Durch die Anbringung der Gelenkpfannen-Abschnitte an den Halbschalen ist es möglich, die beiden Gelenkpfannen-Abschnitte sehr fest miteinander zu verbinden ohne Begrenzung hinsichtlich der Materialauswahl und der Hinterschnittgeometrie. Dabei ist es auf diese Weise auch möglich, transparente, jedoch vergleichsweise brüchige Materialien, wie Polysterol, SAM, PEC, K-Resin, Polycarbonat oder Acrylgas einzusetzen.

In weiterer Ausgestaltung der Erfindung ist eine Schließeinrichtung zum Verriegeln der Schalen gegeneinander in deren geschlossenen Zustand vorgesehen. Hierdurch ist es möglich, den Innenraum zwischen den Schalen wahlweise zugänglich zu machen und dort beispielsweise Austausch-Bürstchen zum Austausch bei Verschleiß oder mit einem anderen Besatz für bestimmte Reinigungszwecke unterzubringen.

Die Schließeinrichtung kann günstigerweise einen Schieber und ein mit diesem verbundenes, längsverschiebbares Schließteil an einer ersten Schale des Halters und ein Arretierteil, in welches das Schließteil einschiebbar ist, an der zweiten Schale des Halters umfassen.

Um ein Verschwenken des Bürstchen einerseits zu ermöglichen und andererseits in Richtung senkrecht zur Schwenkrichtung dieses festzulegen und die Endlagen zu stabilisieren, kann wenigstens einer der Kugelgelenkpfannen-Abschnitte einen Schlitz mit Einrastausnehmungen aufweisen, der den Stiel des Bürstchen umgibt.

Die beiden Halbschalen des Halters können durch ein Scharnier, insbesondere ein Filmscharnier, an dem dem Bürstchen abgewandten Ende verbunden sein.

Das dem Bürstchen abgewandte Ende des Halters kann eine Standfläche aufweisen, so daß es möglich ist, ein solches Interdental-Reinigungsgerät platzsparend in einem Toilettenschrank o. dgl. unterzubringen.

Zur Erzielung eines zuverlässigen Standes können an der Standfläche Standbeine in Form von noppenartigen Auswölbungen ausgebildet sein.

Zur Erleichterung des Öffnens der beiden Halbschalen kann an wenigstens einer davon eine sich von der Innenkante wegerstreckende Griffmulde ausgebildet sein.

Nachfolgend wird die Erfindung anhand eines bevorzugten Ausführungsbeispiels in Verbindung mit der Zeichnung näher erläutert. Dabei zeigen:
- Fig. 1: eine Ansicht eines erfindungsgemäßen Interdental-Reinigungsgeräts,
- Fig. 2: eine gegenüber Fig. 1 um 90 ° gedrehte Ansicht, wobei die Verschwenkbarkeit des Bürstchen veranschaulicht ist,
- Fig. 3: eine teilweise abgebrochen gezeichnete Ansicht auf das Interdental-Reinigungsgerät im aufgeklappten Zustand,
- Fig. 4: eine Ansicht im aufgeklappten Zustand der in Fig. 1 sichtbaren Halbschale aus einem um 180 ° gedrehten Blickwinkel und
- Fig. 5: eine perspektivische, vergrößerte Ansicht des Lagerbereiches des Bürstchens.

Ein in der Zeichnung dargestelltes Interdental-Reinigungsgerät 1 umfaßt zwei Halbschalen 2, 3, an deren einem Ende 4 ein Bürstchen 5 schwenkbar gelagert ist, und deren anderes Ende 6 als Stellfläche 7 mit Standbeinen 8 ausgebildet ist, wobei die Halbschalen 2, 3 über ein Filmscharnier 9 gelenkig-aufklappbar verbunden sind. Zur Erleichterung des Aufklappvorgangs sind Griffmulden 10, 11 an jeder der Halbschalen vorgesehen. Wie bei 12 angedeutet, können im Inneren der Halbschalen 2, 3 weitere Bürstchen untergebracht werden.

Zur Verriegelung der beiden Halbschalen 2, 3 gegeneinander ist ein Schieber 13 vorgesehen, der in einer Längsausnehmung 14 der Halbschale 2 längsverschiebbar gelagert ist. Der Schieber 13 ist an seiner Unterseite, also in der Innenseite der Halbschale 2, mit einem Schließteil 15 verbunden, welches durch einen längsgefuhrten, elastischen Kunststoffstab gebildet sein kann. An der anderen Halbschale 3 ist ein Arretierteil 16 in Form einer Öse befestigt, in die das Schließteil 15 zum Verschließen einschiebbar ist.

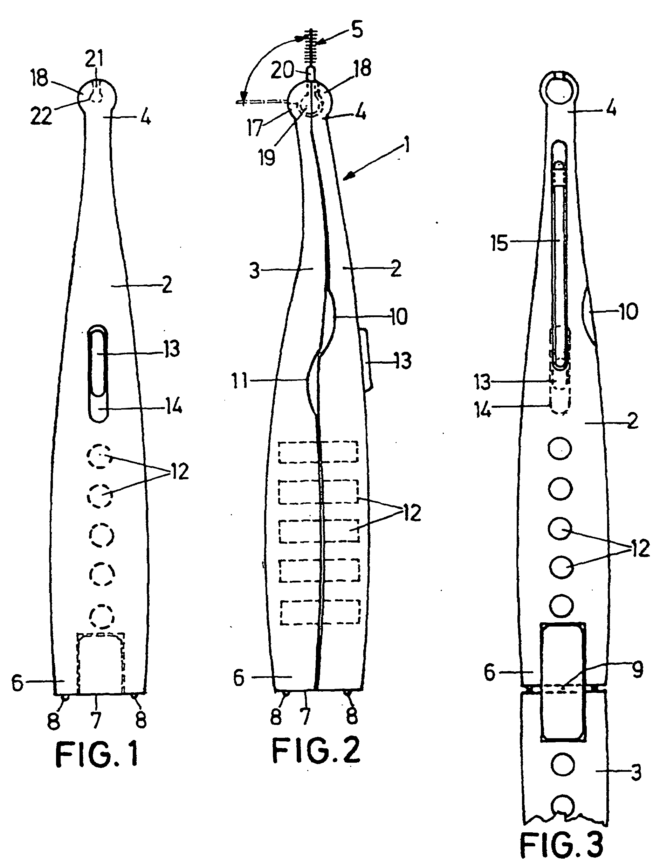

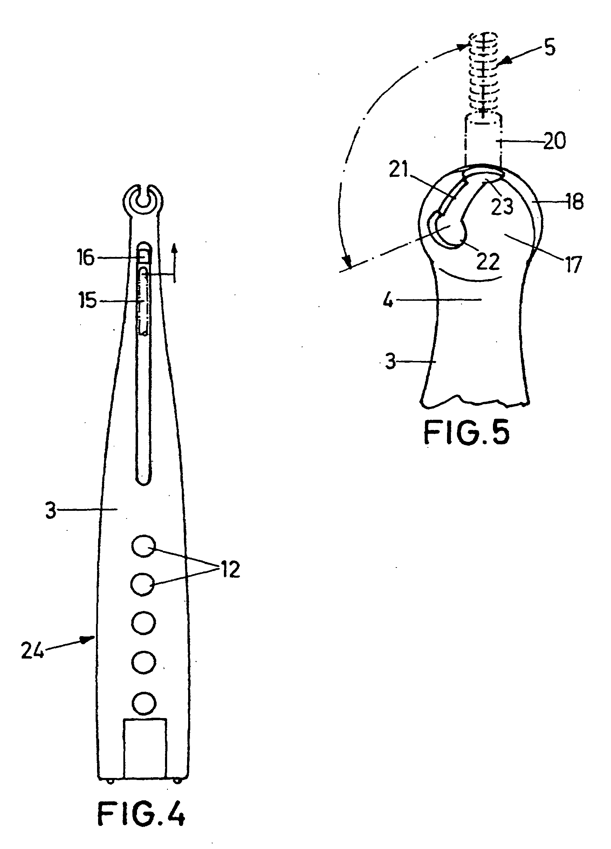

Wie insbesondere aus Fig. 2 in Verbindung mit Fig. 4 deutlich wird, ist am bürstchenseitigen Ende 4 jeder Halbschale 2, 3 ein Gelenkpfannen-Abschnitt 17, 18 in Form einer Halbkugel angeformt, so daß im Inneren eine kugelförmige Lagerausnehmung entsteht, welche ein Kugelgelenk-Lagerteil 19 aufweist, an welchem der Stiel 20 des Bürstchens 5 befestigt ist. In dem einen Gelenkpfannen-Abschnitt 17 ist ein Schlitz 21 ausgebildet, der sich über einen Winkelbereich von etwa 90 ° erstreckt, und an dessen Enden Ausnehmungen 22, 23 ausgebildet sind, deren Durchmesser etwa dem Durchmesser des Stiels 20 entspricht, wohingegen die Breite des Schlitze 21 etwas kleiner ist als der Durchmesser des Stiels 20, so daß hierdurch zwei stabile Endlagen für das Bürstchen einmal in axialer Verlängerung des durch die Halbschalen 2, 3 gebildeten Halters 24 und einmal senkrecht hierzu definiert werden.

## Patentansprüche

1. Interdental-Reinigungsgerät umfassend ein Bürstchen und einen Halter, wobei das Bürstchen am freien Ende des Halters schwenkbar und auswechselbar angeordnet ist, und wobei der Halter aus zwei Halbschalen besteht, dadurch gekenzeichnet, daß das Bürstchen (5) ein Kugelgelenk-Lagerteil (19) aufweist und eine Kugelgelenk-Lagerpfanne durch zwei Kugelgelenkpfannen-Abschnitte (17, 18) gebildet ist, wobei je ein Kugelgelenkpfannen-Abschnitt (17, 18) an je einem Ende einer Halbschale (2, 3) des Halters (24) ausgebildet ist, und wenigstens einer der Kugelgelenkpfannen-Abschnitte (17, 18) einen Schlitz (21) mit Einrastausnehmungen (22, 23) aufweist.

2. Interdental-Reinigungsgerät nach Anspruch 1, **dadurch gekennzeichnet, daß** eine Schließeinrichtung zum Verriegeln der Halbschalen (2, 3) gegeneinander in deren geschlossenen Zustand vorgesehen ist.

3. Interdental-Reinigungsgerät nach Anspruch 2, **dadurch gekennzeichnet, daß** die Schließeinrichtung einen Schieber (13) und ein mit diesem verbundenes, längsverschiebbares Schließteil (15) an einer ersten Halbschale (2, 3) des Halters (24) und ein Arretierteil (16), in welches das Schließteil (15) einschiebbar ist, an der zweiten Halbschale (2, 3) des Halters (24) umfaßt.

4. Interdental-Reinigungsgerät nach Anspruch 1, **dadurch gekennzeichnet, daß** die beiden Halbschalen (2, 3) durch ein Filmscharnier (9) an dem dem Bürstchen (5) abgewandten Ende (6) verbunden sind.

5. Interdental-Reinigungsgerät nach Anspruch 1, **dadurch gekennzeichnet, daß** im Inneren der Halbschalen (2, 3) ein Hohlraum (12) zur Aufnahme eines oder mehrerer Bürstchen ausgebildet ist.

6. Interdental-Reinigungsgerät nach Anspruch 1, **dadurch gekennzeichnet, daß** das dem Bürstchen (5) abgewandte Ende (6) des Halters (24) eine Standfläche (7) aufweist.

7. Interdental-Reinigungsgerät nach Anspruch 6, **dadurch gekennzeichnet, daß** an der Standfläche (7) noppenartige Standbeine (8) angeordnet sind.

8. Interdental-Reinigungsgerät nach Anspruch 6, **dadurch gekennzeichnet, daß** an wenigstens einer der Halbschalen (2, 3) sich von der Innenkante weg erstreckende Griffmulden (10, 11) ausgebildet sind.

## Claims

1. An interdental cleaning device comprising a brush and a holder, the brush being pivotably and replaceably disposed on the free end of the holder, and wherein the holder (24) consists of two shells, **characterized in that** the brush (5) comprises a ball (19) of a ball and socket joint and a socket of the ball and socket joint is formed by two socket members (17, 18), wherein each respective socket member (17, 18) is formed on each respective end of a shell (2, 3) of the holder (24), and at least one socket member (17, 18) comprises slit (21) with locking recesses (22, 23).

2. An interdental cleaning device according to claim 1, **characterized in that** a locking mechanism is provided for interlocking the shells (2, 3) in their closed condition.

3. An interdental cleaning device according to claim 2, **characterized in that** the locking mechanism comprises a slide (13) and a lengthwise displaceable locking member (15) joined to the slide (13) on a first shell (2, 3) of the holder (24), and an arresting member (16), into which to push the locking member (15), on the second shell (2, 3) of the holder (24).

4. An interdental cleaning device according to claim 1, **characterized in that** the two shells (2, 3) are united by an integral hinge (9) on the end (6) turned away from the brush (5).

5. An interdental cleaning device according to claim 1, **characterized in that** a cavity (12) is formed in the interior space of the shells (2, 3) for the accommodation of one or several brushes.

6. An interdental cleaning device according to claim 1, **characterized in that** the end (6) of the holder (24) that is turned away from the brush (5) has a base (7).

7. An interdental cleaning device according to claim 6, **characterized in that** knob-type legs (8) are disposed on the base (7).

8. An interdental cleaning device according to claim 6, **characterized in that** recessed grips (10, 11) are formed on at least one of the shells (2, 3), standing back from the inner edge.

## Revendications

1. Appareil de nettoyage interdentaire comprenant une petite brosse et un support, moyennant quoi la petite brosse est disposée de manière articulée et interchangeable au niveau de l'extrémité libre du support et moyennant quoi le support est constitué de deux demi-coquilles, **caractérisé en ce que** la brosse (5) comprend un partie de palier d'articulation à bille (19) et un coussinet de palier d'articulation à bille constitué de parties de coussinet d'articulation à bille, moyennant quoi chaque partie de coussinet d'articulation à bille (17, 18) se trouve à une extrémité d'une demi-coquille (2, 3) du support (24) et au moins une des parties de coussinet d'articulation à bille (17, 18) comprend une fente (21) avec des évidements d'encliquetage (22, 23).

2. Appareil de nettoyage interdentaire selon la revendication 1, **caractérisé en ce qu'**un dispositif de fermeture est prévu pour le verrouillage des demi-coquilles (2, 3) l'un contre l'autre dans leur état fermé.

3. Appareil de nettoyage interdentaire selon la revendication 2, **caractérisé en ce que** le dispositif de fermeture comprend un coulisseau (13) et une partie de fermeture (15) coulissante dans la direction longitudinale et reliée à celle-ci, sur une première demi-coquille (2, 3) du support (24) et une partie de blocage (16) dans laquelle la partie de fermeture (15) peut être insérée, sur la deuxième demi-coquille (2, 3) du support (24).

4. Appareil de nettoyage interdentaire selon la revendication 1, **caractérisé en ce que** les deux demi-coquilles (2, 3) sont reliées par une charnière à film (9) au niveau de l'extrémité (6) orientée du côté opposé à la brosse (5).

5. Appareil de nettoyage interdentaire selon la revendication 1, **caractérisé en ce qu'**à l'intérieur des demi-coquilles (2, 3), se trouve un espace (12) pour le logement d'une ou plusieurs brosses.

6. Appareil de nettoyage interdentaire selon la revendication 1, **caractérisé en ce que** l'extrémité (6) du support (24) orientée du côté opposé à la brosse (5) comprend une surface de base (7).

7. Appareil de nettoyage interdentaire selon la revendication 6, **caractérisé en ce que**, sur la surface de base (7), se trouvent des jambes de support (8) qui ont la forme de boutons.

8. Appareil de nettoyage interdentaire selon la revendication 6, **caractérisé en ce que**, sur au moins une des demi-coquilles (2, 3), se trouvent des poignées moulées (10, 11) qui s'étendent en s'éloignant du bord intérieur.
